Europäisches Patentamt

European Patent Office

Office européen des brevets

(11) Publication number: **0 188 878**
**A1**

# EUROPEAN PATENT APPLICATION

(21) Application number: 85308797.1

(22) Date of filing: 03.12.85

(51) Int. Cl.⁴: **G 01 V 5/10,** G 01 V 5/12

(30) Priority: 17.12.84 US 682731

(43) Date of publication of application: 30.07.86 Bulletin 86/31

(84) Designated Contracting States: DE FR GB NL

(71) Applicant: HALLIBURTON COMPANY, P.O. Drawer 1431, Duncan Oklahoma 73536 (US)

(72) Inventor: Gadeken, Larry L., 12819 Westleigh, Houston Texas 77077 (US)
Inventor: Randy, Gold, 4038 Knoll Glen Drive, Houston Texas 77084 (US)

(74) Representative: Wain, Christopher Paul et al, A.A. THORNTON & CO. Northumberland House 303-306 High Holborn, London WC1V 7LE (GB)

(54) Borehole compensation for neutron porosity devices.

(57) In a neutron flux porosity measuring tool, selectively shielded and located neutron detectors are used. Optionally, a pad (16) is positioned against the side wall of a well to urge a decentralized tool against the opposite side wall. The tool supports within a pressure housing a neutron source (30), a near detector (34, 36) for impinging neutron flux and a far neutron flux detector (50, 58). The near detector is duplicated by a similar detector arranged on the opposite side of the tool pressure housing and shielded therefrom. It is located to observe thermal neutron flux impinging from the opposite side, that is, flux passing through the well bore and also flux as modified by the transmission of neutrons through the drilling fluid. With appropriate shielding (42), the two near detectors thus provide different flux measurements, one primarily derived from the formation and the other primarily derived from borehole geometry and drilling fluid properties. This enables a signal to be obtained which is directly proportional to the borehole environment and which can thereby be used to compensate the porosity values obtained from a near/far ratio calculation for perturbations due to the borehole influence.

- 1 -

BOREHOLE COMPENSATION FOR NEUTRON POROSITY DEVICES

This invention relates to borehole compensation for neutron porosity device.

One device useful in determining the porosity of formations adjacent to a well borehole is a neutron flux measuring device. If the lithology of the adjacent formations is known and with knowledge of the type of fluid, formation porosity can then be determined by neutron flux measurements.

We have now devised an apparatus useful for obtaining an accurate measurement of porosity from the neutron flux.

The apparatus of the invention comprises

(a) a pressure housing having first and second external face portions located oppositely of each other wherein one of said face portions is adapted to be placed against the well borehole wall to observe nuclear events from the direction confronted by said face portion, and wherein the remaining of said face portions confronts the well borehole to observe nuclear events from the direction confronted thereby;

(b) first and second similar nuclear event detector means, one of said means being positioned at one of said face portions and the remaining of said means being positioned at the remaining of said face portions; and

(c) first shield means for shielding said first and second detector means so that the directions of impingement of nuclear events of said detector means are oppositely directed wherein one of said detector means is directed at the wall of said well borehole and the other of said detector means is directed at the well borehole.

The pressure housing is normally forced against the borehole wall. The neutron flux detectors are mounted on the face of the pressure housing located so that they are directed to the formation, and are therefore directionally biased by this position achieved in the well. This enables the device to obtain relatively good measurements from neutron flux originating primarily in the adjacent formations. Measurement errors arise in prior known apparatus from flux distortions resulting from borehole geometry and from the fluid in the borehole. The apparatus of the present invention enables separate measurements of the borehole and formation components of neutron flux. This will be set forth in the context of a neutron flux measuring system incorporating a neutron source and multiple detectors as described.

Previously, one of the two detectors was described as the near detector, and the second was the far detector. In this regard, the construction of the present invention is similar to dual spaced neutron detectors known heretofore. However, the detector system is replicated, that is there are two

duplicate near detectors. The pressure housing is ordinarily cylindrical; the two near detectors are spaced 180° apart around the circumference so that one views the adjacent formations and is thereby measuring primarily the flux density from the formations. On the opposite side, the second detector is directed toward the borehole. That is, it measures flux which originates from the opposite side of the tool. The two detectors are separated from one another by position, and shield material is placed between them. For thermal neutron applications, the shield material can typically be a cadmium sheet to define a system whereby the two adjacent but oppositely facing near detectors are shielded where each measures the flux primarily from the direction in which it faces. Thus, the two detectors are directional and isolated. For epithermal neutron flux measurements, a highly absorbing shield material such as boron carbide placed between the detectors may suffice so that adequate isolation is obtained.

Generally, the far detector is volumetrically larger to increase the count rate. The present invention can be used with one far detector (typically larger) or can be used with two separate far detectors deployed with the detectors facing opposite directions and shielded in the same fashion as the two near detectors. Hence, one embodiment of the apparatus includes two far detectors facing opposite directions in the same fashion as the near detectors. An alternate arrangement involves a single large far detector without the shielding which assists directionality.

In use, the pressure housing is normally decentralized. However, washout of the well may widen the hole in such a fashion that the tool does not contact the borehole wall as desired. Even if the tool is not truly centralized, the pressure housing supports the detectors internally with shielding so that the detectors are nevertheless operative with controlled and shielded views, thereby enabling flux discrimination as taught herein.

In summary, the present invention provides a neutron flux measuring system particularly useful in determining porosity wherein multiple near detectors are included, some facing the formation and the others isolated and facing the borehole. The directionality of the two detector systems aids and assists in measuring the portion of the neutron flux attributable to the formation, and simultaneously, the part of the neutron flux attributable to the borehole geometry and fluid contained therein.

An embodiment of the present invention will now be particularly described by way of example and with reference to the accompanying drawings, in which:

FIGURE 1 is a sectional view through a neutron flux measuring apparatus in accordance with the teachings of this disclosure showing pairs of detectors directionally facing the formation and the well borehole respectively; and

FIGURE 2 is a sectional view along the line 2-2 of Figure 1 showing additional details of construction of the neutron flux measuring apparatus.

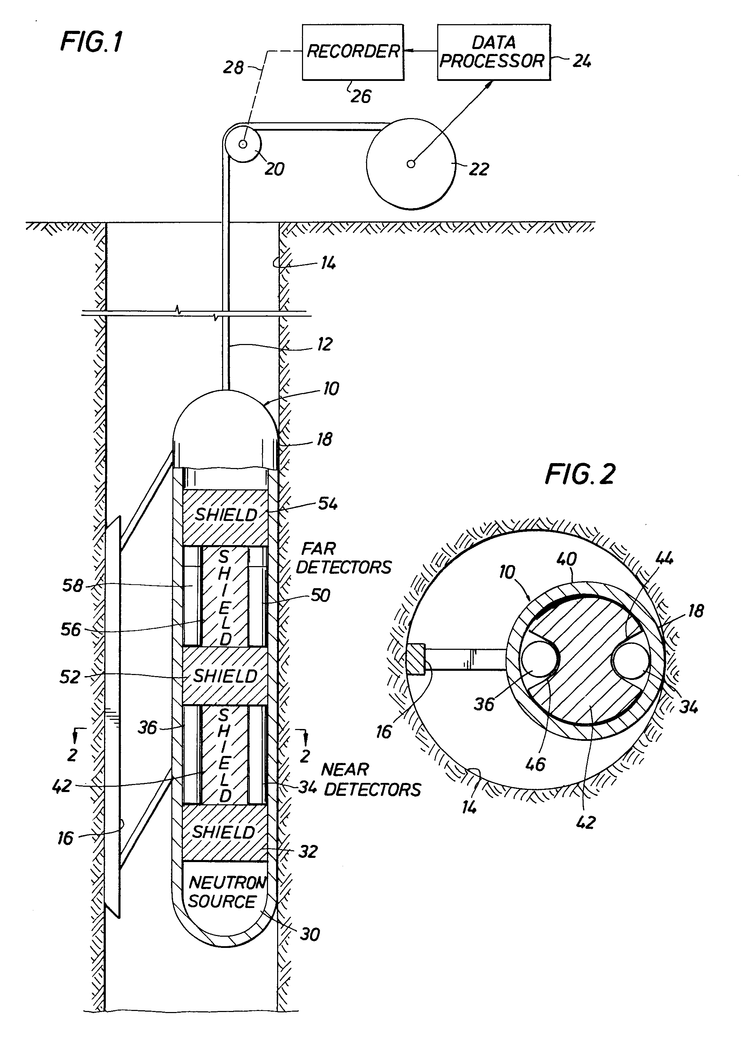

Attention is directed to Figure 1 of the drawings where the present apparatus is shown. A sonde 10 supported on an armored logging cable 12 is suspended in a well bore 14. The sonde 10 is pressed against one side of the well borehole. The well may be open hole or cased. It may be forced to the side and decentralized by means including a decentralizing pad 16. The sonde 10 is cylindrical in cross section and incorporating a face 18 which is the face of the cylinder which portion is adapted to be pressed against the wall of the borehole 14.

The logging cable 12 extends upwardly to the surface and passes over a sheave 20 and is stored on a reel or drum 22. Several thousand feet (1 foot = 0.3 m) of logging cable are typically placed on the drum to enable the sonde to be lowered to the bottom before it is retrieved along the full depth of the well. Moreover, suitable signal conductors are included in the logging cable 12 and connected with a data processor 24 which converts the signals into a suitable format. The data is then supplied to a recorder 26. It is recorded as a function of depth in the well borehole, there being a mechanical or electronic depth indicating apparatus 28 operative with the sheave 20 and providing a depth measurement to the recorder 26.

Going now to the sonde 10, it will be observed that it incoporates a neutron source 30. The neutron source directs neutrons into the formation adjacent to the borehole. The neutron source 30 is isolated so that neutrons do not simply travel up the sonde 10 and impinge on the detectors thereabove. A shield 32 is included between the source 30 and the neutron detectors thereabove. The shield is sufficiently thick to attentuate neutron flux from the source 30 whereby the

neutrons impinging on the detectors above the shield primarily come from the exterior of the pressure housing.

The numeral 34 identifies a first near detector. A second and identical neutron detector 36 is located on the opposite side of the tool. The detectors 34 and 36 are preferably identical. The preferred embodiment utilizes a $^3$He proportional counter. Structurally, it is an elongate cylindrical body. They are deployed on opposite sides of the sonde. That is, the numeral 18 identifies the side portion which faces the formation. The neutron detector 34 is located (see Fig. 2) on this side so that it is able to face the adjacent formations. The neutron detector 36 is 180° oppositely located so that it faces the borehole.

In Fig. 2 of the drawings, the mounting of the two detectors will be observed. The numeral 40 identifies the exterior face of the pressure housing. It is shown to have finite thickness. On the inside, there is an enclosed cavity for receiving the components or equipment located in the pressure housing. The detectors 34 and 36 are located on the interior of the pressure housing. They are received in cavities defined within a surrounding pressure housing. A shield is identified by the numeral 42. In some instances, it may be an area lined with aluminum. Alternatively, aluminum foil sandwiched with cadmium will also suffice. As another choice, it can be filled with boron carbide which is a neutron absorber. Shield design can be determined and implemented by selection of material thickness and placement.

The detectors 34 and 36 are received in conforming notches 44 and 46. They are elongate notches longer than the detectors and have a width and profile enabling the detectors to nest within them on the interior of the pressure housing. The angle of the two notches can be varied; the notch for the detector 36 inscribes approximately 90°; that can be increased to about 135°. Increasing the angle of the notch 46 reduces the shield material immediately adjacent to the detector, thereby enabling the detector to have wider field of vision, so to speak. By contrast, the notch 44 is somewhat narrower and therefore inscribes a more limited angle. The angle of the two notches 44 and 46 can be adjusted whereby a narrow or broad field of vision can be achieved for either. In the ordinary circumstance, the notch 44 is relatively narrow to have a narrow field of vision so as to emphasize the detection of the neutron flux impinging from the direction of the formation. Contrariwise, the notch 46 may be relatively wide and permits a wide field of vision if experience should prove that this feature is desirable. The cavity 42 is thus used to receive and hold shield material. The shield material encompasses at least as much length of the tool as is necessary to extend beyond both detectors, and also tends to wrap around the two detectors, at least to the extent permitted by the angle of convergence of the two notches 44 and 46.

In summary, it will be understood from the foregoing description of the two near detectors 34 and 36 that the detector 34 primarily observes nuclear events impinging from the formation, and the detector 36 observes nuclear events impinging from the opposite direction. The observed neutron flux at the detector 36 is primarily characteristic of borehole geometry and transmission of the neutron flux through the borehole fluid. The two measurements are separately output and are used in a fashion to be described below.

Returning now to Fig. 1 of the drawings, the numeral 50 identifies a far detector. It is positioned immediately above the detector 34; the detectors 34 and 50 are at a common location on the face 18 and are directed toward the adjacent formations for making measurements of neutron flux from those formations. The two detectors are isolated by a shield 52 therebetween. As appropriate, additional shielding is located above the detector 50 and is identified by the numeral 54. The detector 50 is also enclosed or surrounded by shield material 56. The detector 50 is received in a notch formed in the shield area 56 more or less similar to that shown in Fig. 2 for the near detectors; that is, it has a notch which defines a field of vision which is relatively narrow or wide depending on design criteria. A similar and oppositely facing far detector 58 is above the near detector 36. The far detectors 50 and 58 are shown as separate devices. As an alternate embodiment, the two far detectors can be replaced with a single large detector. It is normally much larger to increase the count rate, and can be so large as to fill the entire available space within the housing of the sonde. In that instance, the far detector would not be directionally biased as the near detectors. In all cases, the measured neutron flux rate of the far detector, whether one or two, is useful as described below.

From the foregoing, it will be observed that there are various count rates provided by the several different detectors. A formation ratio is defined by the count rates from the detectors 34 and 50; this ratio is defined as 34/50. A conventional ratio known in the past was simply the ratio of the near count ratio to the far count ratio; in this instance, that would be the ratio of (34 + 36)/(50 + 58). A ratio of 34/36 would be fairly indicative of quality of data. This ratio is the one which will be useful to accomplish borehole compensation. The algorithm itself is typically determined from known test formation measurements and tool geometries in addition to known field situations. This may very well indicate faulty positioning of the sonde 10 against the adjacent side wall. The various sums and ratios can be used in a variety of ways; thus, the output is in the form of signals from all detectors to enable the signals to be manipulated at the surface to form various ratios or totals. The point here is that the additional measurement make a measurement proportional to the tool position in the hole and can be incorporated into a borehole compensation algorithm which does not depend on an assumed tool position. This feature is expected to result in much more accurate porosity determinations.

CLAIMS:

1.      Apparatus for use in a measuring device in a sonde (10) for conducting well logging operations by the observation of nuclear events impinging on the apparatus, the apparatus comprising:

(a)   a pressure housing having first (18) and second external face portions located oppositely of each other wherein one of said face portions is adapted to be placed against the well borehole wall to observe nuclear events from the direction confronted by said face portion, and wherein the remaining of said face portions confronts the well borehole to observe nuclear events from the direction confronted thereby;

(b)   first (34) and second (36) similar nuclear event detector means, one of said means being positioned at one of said face portions and the remaining of said means being positioned at the remaining of said face portions; and

(c)   first shield means (42) for shielding said first (34) and second (36) detector means so that the directions of impingement  of nuclear events of said detector means are oppositely directed wherein one of said detector means is directed at the wall of said well borehole and the other of said detector means is directed at the well borehole.

2.      Apparatus according to claim 1, comprising a neutron source (30) located along the length of said pressure housing.

3.      Apparatus according to claim 2, further comprising a second shield (32) between said neutron source and said first and second detector means.

4. Apparatus according to claim 1,2 or 3, wherein said pressure housing supports a third similar nuclear event detector means spaced further along said pressure housing than said first and second detector means.

5. Apparatus according to claim 4, further comprising third shield means (52) between said first and second nuclear event detector means and said third nuclear event detector means.

6. Apparatus according to claim 5, further comprising a fourth similar nuclear event detector means spaced at an elevation on said pressure housing common with said third nuclear event detector means, and wherein said third and fourth detector means are directionally positioned similar to said first and second detector means.

7. Apparatus according to any preceding claim, wherein said first (34) and second (36) nuclear event detector means are at a common lengthwise location in said pressure housing; wherein said pressure housing is a cylindrical body; and wherein said first and second detector means are located diametrically opposite one another in said housing.

8. Apparatus according to any preceding claim, wherein said first shield means is neutron scattering means.

9. Apparatus according to claim 8, wherein said first shield means (42) is aluminum, cadmium or a combination thereof.

10.     Apparatus according to any of claims 1 to 7, wherein said first shield means (42) is a high energy neutron flux absorber material.

1/1

0188878

FIG.1

RECORDER

DATA PROCESSOR — 24

28

26

20

22

14

12

10

18

SHIELD — 54

FAR DETECTORS

58

SHIELD

56

50

52

SHIELD

36

SHIELD

2

2

42

34 NEAR DETECTORS

16

SHIELD — 32

NEUTRON SOURCE

30

FIG.2

10  40  44

18

16

36  46  34

14  42

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | US-A-3 183 358 (COOLEY) <br><br> * Column 4, lines 54-69; column 5, line 53 - column 6, line 57; column 8, line 70 - column 9, line 13; column 9, lines 39-64; figures 1-6; column 19, lines 16-19 * | 1-4,7, 8 | G 01 V 5/10 <br> G 01 V 5/12 |
| A | | 10 | |
| | --- | | |
| Y | US-A-2 996 618 (GOODMAN & DEWAN) <br> * Column 3, lines 47-66; column 4, lines 19-45; column 5, lines 46-60; column 6, lines 66-68; figures 1-6 * | 1-4,7, 8 | |
| | | | **TECHNICAL FIELDS SEARCHED (Int. Cl.4)** |
| A | | 9 | |
| | --- | | G 01 V |
| A | US-A-3 147 376 (HALL) <br> * Column 1, lines 44-48; column 2, lines 42-61; column 3, lines 49-70; column 5, lines 3-19 ; figures * | 1-3,10 | |
| | ---     -/- | | |

The present search report has been drawn up for all claims

| Place of search | Date of completion of the search | Examiner |
|---|---|---|
| THE HAGUE | 08-04-1986 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# EUROPEAN SEARCH REPORT

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-2 785 314 (GRAHAME)<br><br>* Column 2, lines 14-16, 32-52; column 3, lines 1-9, 14-23; column 3, 61 - column 4, line 7; column 3, lines 21-26, 38-65; figures 1-4 * | 1-3,7-10 | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 08-04-1986 | DATTA S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82